# EUROPEAN PATENT SPECIFICATION

(11) **EP 1 548 072 B1**
(45) Date of publication and mention of the grant of the patent: **14.11.2007**
(21) Application number: 03758697.1
(22) Date of filing: 25.09.2003
(51) Int. Cl.: C09D 11/00, B41M 5/00, B41J 2/01

(54) **WATER BASE INK COMPOSITION, METHOD OF INK JET RECORDING THEREWITH AND RECORD**
WûSSRIGE TINTENZUSAMMENSETZUNG, DAMIT DURCHGEF HRTES TINTENSTRAHLDRUCKVERFAHREN SOWIE AUFZEICHNUNG
COMPOSITION D'ENCRE A BASE D'EAU, PROCEDE D'IMPRESSION JET D'ENCRE A PARTIR DE CELLE-CI, ET IMPRIME CORRESPONDANT

(30) Priority: 27.09.2002 JP 2002284270
(43) Date of publication of application: 29.06.2005
(73) Proprietor: Seiko Epson Corporation, Shinjuku-ku Tokyo 163-0811 (JP)
(72) Inventor: ITO, Hiroshi, c/o Seiko Epson Corporation, Suwa-shi, Nagano 392-8502 (JP); OHTA, Hitoshi, c/o Seiko Epson Corporation, Suwa-shi, Nagano 392-8502 (JP); KOMATSU, Hidehiko, c/o Seiko Epson Corporation, Suwa-shi, Nagano 392-8502 (JP); ISHIHARA, Daisuke, c/o Seiko Epson Corporation, Suwa-shi, Nagano 392-8502 (JP); KASAHARA, Nagatoshi, c/o Seiko Epson Corporation, Suwa-shi, Nagano 392-8502 (JP)
(74) Representative: Grünecker, Kinkeldey, Stockmair & Schwanhäusser Anwaltssozietät
(86) International application number: PCT/JP2003/012230
(87) International publication number: WO 2004/029165

(56) References cited:
- EP-A- 0 899 311
- WO-A-99/50365
- JP-A- 2000 265 083
- JP-A- 2002 088 285
- JP-A- 2002 194 262

## Description

### <TECHNICAL FIELD>

The present invention relates to an aqueous ink composition, an inkjet recording method, and recorded matter.

### <BACKGROUND ART>

The inkjet recording method is a printing method of ejecting small droplets of an ink composition and making them adhere to a recording medium such as paper, thereby achieving printing. This method is characterized in that it is possible to print a high-grade image with a high resolution at a high speed by a relatively cheap device.

The ink composition to be used in the inkjet recording is generally one comprising water as the major component and containing a coloring component and a humectant such as glycerin for the purpose of preventing plugging and the like. As coloring agents that are used in the ink composition for inkjet recording, a large number of water-soluble dyes are used because of high saturation of colorants, plenty of the kind of colorants that can be utilized, solubility in water, and so on.

On the other hand, however, dyes are often inferior in various characteristics including light fastness and water resistance, and therefore, printed matters printed from a dye based ink composition are inferior in the light fastness and water resistance. Though the water resistance is improved by recording paper exclusive for inkjet, which has an ink absorbing layer, it is hard to say that the water resistance is satisfactory with respect to plain paper yet.

Pigments are superior to dyes with respect to the light fastness and water resistance, and in recent years, for the purpose of improving the light fastness and water resistance, applications as a coloring agent of an ink composition for inkjet recording are being investigated. Here, since a pigment is generally insoluble in water, in the case of applying a pigment to an aqueous ink composition, it is required to mix the pigment together with a dispersant such as water-soluble resins, stably disperse it in water, and then prepare the dispersion as an ink composition.

In order that a pigment may be stably dispersed in the aqueous system, it is necessary to investigate the kind and particle size of the pigment, the kind of a resin to be used, and dispersion means, etc. and a number of dispersion methods and inks for inkjet recording have been proposed so far. For example, aqueous pigment inks in which carbon black is dispersed with a surfactant or a high-molecular dispersant are known (see Patent Document 1 and Patent Document 2).

Also, an ink composition comprising water, a styrene-maleic acid copolymer, ε-caprolactam, and a pigment is proposed (see Patent Document 3).

Also, an ink composition containing an aqueous medium, a styrene-maleic acid copolymer, and a copper phthalocyanine pigment is proposed (see Patent Document 4).

Also, an aqueous ink using a resin in which 60 % by mole or more of an acid group of a dispersing resin is neutralized with an alkaline neutralizing agent is proposed (see Patent Documents 5 and 6).
Patent Document 1: JP 64-6074 A
Patent Document 2: JP 64-31881 A
Patent Document 3: JP 3-252467 A
Patent Document 4: JP 3-79680 A
Patent Document 5: JP 8-183920 A
Patent Document 6: JP 9-40895 A

For the sake of using a pigment in an ink for inkjet recording as prescribed previously, it is important to stably disperse the pigment in water and hold it over a long period of time. However, the conventional technologies of the foregoing Patent Document 1 to Patent Document 4 were not satisfactory.

Also, a variety of water-soluble organic solvents for optimizing the inkjet recording method are added as an essential component to an ink to be used in the inkjet recording method in addition to a coloring agent. A humectant to be added for the purpose of preventing drying, a penetration solvent or a surfactant to be added for the purpose of reducing a surface tension of the ink to control its penetrability into recording paper, an organic amine for adjusting the pH of the ink, and the like are added to the ink. Some of these solvents may possibly influence the dispersed coloring agent to inhibit its dispersion, thereby inhibiting stable dispersion of the ink. In particular, solvents having high affinity with the surface of a pigment having a hydrophobic surface or a hydrophobic part in the resin involved such a problem that these influences are likely revealed.

In the aqueous ink using a resin in which 60 % by mole or more of an acid group of a dispersing resin is neutralized with an alkaline neutralizing agent as described in the foregoing Patent Document 5 and Patent Document 6, there was a problem that the resin and a water-soluble organic solvent to be used are influenced each other, thereby lowering the storage stability depending upon the kind of the water-soluble organic solvent.

The invention is aimed to provide an aqueous ink composition having high storage stability.

### <DISCLOSURE OF THE INVENTION>

The present inventors made extensive and intensive investigations. As a result, it has been found that the foregoing problems can be solved by the following constructions.

Specifically, the invention is as described in the following (1) to (17).
(1) An aqueous ink composition containing a coloring agent, a "dispersing resin containing a repeating unit structure (I) having an unneutralized group and a repeating unit structure (II) having a neutralized group and capable of being hydrated and/or dissolved in water", a "water-soluble organic solvent capable of swelling and/or dissolving the repeating unit structure (I)", and water.
(2) The aqueous ink composition as set forth above in (1), wherein the water-soluble organic solvent is a cyclic amide compound and/or a cyclic urea compound.
(3) The aqueous ink composition as set forth above in (1), wherein the water-soluble organic solvent is a glycol monoether derivative of a polyhydric alcohol.
(4) The aqueous ink composition as set forth above in (1), wherein the water-soluble organic solvent is a water-soluble low-molecular monohydric alcohol.
(5) The aqueous ink composition as set forth above in any one of (1) to (4), wherein the weight of the repeating unit structure (I) is in the range of from 0.05 % by weight to 10 % by weight based on the weight of the water-soluble organic solvent.
(6) The aqueous ink composition as set forth above in any one of (1) to (4), wherein the weight of the repeating unit structure (I) is in the range of from 0.15 % by weight to 5 % by weight based on the weight of the water-soluble organic solvent.
(7) The aqueous ink composition as set forth above in any one of (1) to (6), wherein the coloring agent is carbon black.
(8) The aqueous ink composition as set forth above in any one of (1) to (6), wherein the coloring agent is an organic pigment.
(9) The aqueous ink composition as set forth above in any one of (1) to (6), wherein the coloring agent is selected from oil-soluble dyes and disperse dyes.
(10) The aqueous ink composition as set forth above in any one of (1) to (9), wherein the unneutralized group of the repeating unit structure (I) is a carboxylic acid group and that the neutralized group of the repeating unit structure (II) is a carboxylic acid anion group.
(11) The aqueous ink composition as set forth above in any one of (1) to (10), wherein the repeating unit structure (I) has a molar ratio in the range of from 1 % to 67 % based on the sum of the repeating unit structure (I) and the repeating unit structure (II).
(12) The aqueous ink composition as set forth above in any one of (1) to (10), wherein the repeating unit structure (I) has a molar ratio in the range of from 1 % to 30 % based on the sum of the repeating unit structure (I) and the repeating unit structure (II).
(13) The aqueous ink composition as set forth above in any one of (1) to (12), further containing a weakly alkaline agent, wherein the composition is alkaline.
(14) The aqueous ink composition as set forth above in (13), wherein the weakly alkaline agent is selected from organic acid salts and organic buffering agents.
(15) The aqueous ink composition as set forth above in any one of (1) to (14), further containing a water-soluble and/or water-dispersible addition resin.
(16) The aqueous ink composition as set forth above in (15), wherein the water-soluble and/or water-dispersible addition resin has a "repeating unit structure (I) having an unneutralized group" and a "repeating unit structure (II) having a neutralized group and capable of being hydrated and/or dissolved in water".
(17) An inkjet recording method comprising ejecting a droplet of the aqueous ink composition as set forth above in any one of (1) to (16) so as to make the droplet adhere to a recording medium, thereby carrying out recording.
(18) Recorded matter printed with the aqueous ink composition as set forth above in any one of (1) to (16) by an inkjet recording method.

### <BEST MODE FOR CARRYING OUT THE INVENTION>

An aqueous ink composition according to an embodiment of the invention contains a coloring agent, a "dispersing resin containing a repeating unit structure (I) having an unneutralized group and a repeating unit structure (II) having a neutralized group and capable of being hydrated and/or dissolved in water", a "water-soluble organic solvent capable of swelling and/or dissolving the foregoing repeating unit structure (I)", and water. According to such a construction, it is possible to obtain an aqueous ink composition having high storage stability.

Here, when the dispersing resin does not have a "repeating unit structure (I) having an unneutralized group", the requirements of the invention are not met, and a stable coloring agent dispersion is not obtained. Also, the water-dissolved liberated resin makes ejection of the ink unstable. On the other hand, when the dispersing resin does not have a "repeating unit structure (II) having a neutralized group and capable of being hydrated and/or dissolved in water", the resin cannot be stably dispersed so that the coloring agent dispersion is coagulated. Further, even if the aqueous ink composition contains a "dispersing resin containing a repeating unit structure (I) having an unneutralized group", when the aqueous ink composition does not contain a water-soluble organic solvent capable of swelling and/or dissolving the repeating unit structure (I), in the case where it is used as an inkjet ink, it is impossible to stably eject the ink in the absence of such a water-soluble organic solvent.

The constructional elements of the aqueous ink composition of the invention will be described below.

### Dispersing resin

The dispersing resin contains a repeating unit structure (I) having an unneutralized group (hereinafter sometimes simply referred to as "repeating unit structure (I)") and a repeating unit structure (II) having a neutralized group and capable of being hydrated and/or dissolved in water (hereinafter sometimes simply referred to as "repeating unit structure (II)"). The "unneutralized group" as referred to herein means a group capable of being neutralized with a neutralizing agent and includes an acid group and an alkaline group. Specific examples of the unneutralized group include a carboxylic acid group and a sulfonic acid group. The "neutralized group" as referred to herein means a group resulting from neutralization of an unneutralized group and is preferably an ion group. The unneutralized group and the neutralized group are preferably an anionic group, and in particular, the case where the unneutralized group is a carboxylic acid group, and the neutralized group is a carboxylic acid anion group (a group of carboxylate) can be suitably enumerated. Examples of carboxylates include lithium carboxylate, sodium carboxylate, potassium carboxylate, and ammonium carboxylate.

For obtaining the dispersing resin, a method of neutralizing a part of an acid group (unneutralized group) of a dispersing resin precursor of a resin having an anionic group with an alkaline compound such as organic amines and alkali metal salt compounds can be suitably enumerated. In this way, it is possible to produce the "dispersing resin containing a repeating unit structure (I) having an unneutralized group and a repeating unit structure (II) having a neutralized group and capable of being hydrated and/or dissolved in water".

For example, the resin having an anionic group is obtained by polymerizing a monomer containing an anionic group (hereinafter referred to as "anionic group-containing monomer") and optionally, other monomer copolymerizable with such a monomer in a solvent.
Examples of the anionic group-containing monomer include monomers having a carboxyl group and monomers having a sulfone group.

As monomers having a carboxyl group, acrylic monomers containing one or two carboxyl groups in the repeating unit are preferable.

Specific examples of monomers having a carboxyl group include acrylic acid, methacrylic acid, crotonic acid, ethacrylic acid, propylacrylic acid, isopropylacrylic acid, itaconic acid, fumaric acid, and maleic acid. Of these, acrylic acid, methacrylic acid, and maleic acid are preferable. It is also preferable that after polymerizing a resin, the resin is sulfonated with a sulfonating agent such as sulfuric acid, fuming sulfuric acid, and sulfamic acid.

As specific examples of monomers having a sulfone group, styrenesulfonic acid, isoprenesulfonic acid, sulfobutyl methacrylate, allylsulfonic acid, and the like are preferable.

Specific examples of other monomers copolymerizable with the anionic group-containing monomer include (meth)acrylic esters such as methyl acrylate, ethyl acrylate, isopropyl acrylate, n-propyl acrylate, n-butyl acrylate, t-butyl acrylate, 2-ethylhexyl acrylate, n-octyl acrylate, lauryl acrylate, benzyl acrylate, methyl methacrylate, ethyl methacrylate, isopropyl methacrylate, n-propyl methacrylate, n-butyl methacrylate, isobutyl methacrylate, t-butyl methacrylate, 2-ethylhexyl methacrylate, n-octyl methacrylate, lauryl methacrylate, stearyl methacrylate, tridecyl methacrylate, and benzyl methacrylate; addition reaction products of a fatty acid and a (meth)acrylic ester monomer having an oxirane structure, such as an addition reaction product of stearic acid and glycidyl methacrylate; addition reaction products of an oxirane compound containing an alkyl group having 3 or more carbon atoms and (meth)acrylic acid; styrene based monomers such as styrene, α-methylstyrene, o-methylstyrene, m-methylstyrene, p-methylstyrene, and p-tert-butylstyrene; itaconic esters such as benzyl itaconate; maleic esters such as dimethyl maleate; fumaric esters such as dimethyl fumarate; acrylonitrile, methacrylonitrile, vinyl acetate, isobornyl acrylate, isobornyl methacrylate, aminoethyl acrylate, aminopropyl acrylate, methylaminoethyl acrylate, methylaminopropyl acrylate, ethylaminoethyl acrylate, ethylaminopropyl acrylate, acrylic aminoethylamide, acrylic aminopropylamide, acrylic methylaminoethylamide, acrylic methylaminopropylamide, acrylic ethylaminoethylamide, acrylic ethylaminopropylamide, methacrylic amide, aminoethyl methacrylate, aminopropyl methacrylate, methylaminoethyl methacrylate, methylaminopropyl methacrylate, ethylaminoethyl methacrylate, ethylaminopropyl methacrylate, methacrylic aminoethylamide, methacrylic aminopropylamide, methacrylic methylaminoethylamide, methacrylic methylaminopropylamide, methacrylic ethylaminoethylamide, methacrylic ethylaminopropylamide, hydroxymethyl acrylate, 2-hydroxyethyl acrylate, 2-hydroxypropyl acrylate, hydroxymethyl methacrylate, 2-hydroxyethyl methacrylate, 2-hydroxypropyl methacrylate, N-methylolacrylamide, and allyl alcohol.

Such a resin preferably has a number average molecular weight in the range of from about 1,000 to 200,000, and especially preferably in the range of from about 3,000 to 150,000. When the number average molecular weight of the resin falls within this range, the resin can fully exhibit a function as a coating film in the coloring agent or as a coating in the ink composition.

It is preferable that such a resin (dispersing resin precursor) and a water-soluble organic solvent described later are chosen in such a combination that the affinity of the dispersing resin precursor with the water-soluble organic solvent becomes high (the dispersing resin precursor is swollen or partially dissolved in the water-soluble organic solvent).

Specific examples of organic amines include salts of a volatile amine compound such as ammonia, triethylamine, tributylamine, dimethylethanolamine, diisopropanolamine, and morpholine; and salts of a sparingly volatile high-boiling organic amine such as diethanolamine, triethanolamine, and tripropanolamine. As specific examples of alkali metal salt compounds, there are enumerated compounds having lithium, sodium, or potassium as an alkali metal; preferably alkali metal hydroxides such as sodium hydroxide, potassium hydroxide, and lithium hydroxide; and more preferably potassium hydroxide.

In the invention, the repeating unit structure (I) preferably has a molar ratio in the range of from 1 to 67 %, and especially preferably in the range of from 1 % to 30 %, based on the sum of the foregoing repeating unit structure (I) and the foregoing repeating unit structure (II). In this way, in particular, it is possible to obtain an aqueous ink composition having high storage stability. When the repeating unit structure (I) is too many, dispersion of the dispersing resin is unstable so that the coloring agent dispersion is likely coagulated. Conversely, when the repeating unit structure (I) is too small, the whole of the dispersing resin is solubilized in water, and the liberated resin that does not adhere to the coloring agent increases, whereby a problem that ejection of the ink becomes unstable is liable to occur.

In the dispersing resin, the amount of the anionic group in the anionic group-containing resin is about 30 KOH-mg/g or more, and preferably in the range of from about 50 to 250 KOH-mg/g in terms of an acid value. When the acid value of the resin falls within such a range, the storage stability of coated coloring agent particles is improved, and the water resistance of the recorded image is improved.

### Water-soluble organic solvent

The ink composition of the invention is constructed such that it contains a humectant and a penetration solvent or a solvent as described below and additionally, an organic amine for the pH adjustment, and the like and contains, as an essential component, a water-soluble organic solvent selected from these materials and capable of swelling and/or dissolving the repeating unit structure (I) of the dispersing resin.

### (Humectant)

A humectant is added for the purpose of inhibiting drying of the ink. It is added for the purpose of inhibiting evaporation of water at the nozzle tip due to drying and preventing coagulation and solidification of the ink from occurrence.

The humectant is chosen from materials that are soluble in water and have high hygroscopicity, and useful examples thereof include polyols such as glycerin, ethylene glycol, diethylene glycol, triethylene glycol, tetraethylene glycol, polyethylene glycol, propylene glycol, dipropylene glycol, polypropylene glycol, 1,3-propanediol, 1,4-butanediol, 1,5-pentanediol, 2,3-butanediol, 2-methyl-2,4-pentanediol, 2-ethyl-1,3-hexanediol, 1,2,6-hexanetriol, and pentaerythritol; lactams such as 2-pyrrolidone and N-methyl-2-pyrrolidone; and ureas such as 1,3-dimethylimidazolidinone.

Additionally, for the purpose of assisting an ability of the foregoing humectant organic solvent, it is possible to jointly use or add a water-soluble solid humectant.

Examples thereof include diols such as 1,6-hexanediol, 1,8-octanediol, 2,2-dimethyl-1,3-propanediol, and 2,2-diethyl-l,3-propanediol, trimetholethane, trimethylolpropane, lactams such as ε-caprolactam, urea derivatives such as urea, thiourea, and ethyleneurea, monosaccharides, disaccharides, oligosaccharides, and polysaccharides such as glucose, mannose, fructose, ribose, xylose, arabinose, galactose, aldonic acid, glucitol, (sorbitol), maltose, cellobiose, lactose, sucrose, trehalose, and maltotriose, and derivatives of these sugars such as reducing sugars, oxidizing sugars, amino acids, and thio sugars of the foregoing sugars. In particular, sugar alcohols are preferable, and specific examples thereof include multitol and sorbitol.

Such a humectant is used singly or in admixture and preferably added in an amount of from 1 % by weight to 40 % by weight, and more preferably from 1 % by weight to 30 % by weight in the ink. Such a humectant can be added in combination with other ink additives in an addition amount such that the ink viscosity is not more than 25 cPs at 25 °C

### (Penetration solvent)

A penetration solvent is an additive for the purpose of accelerating ink penetrability into a recording medium and is adequately chosen depending upon the desired ink drying time.

As one example of the penetration solvent, a water-soluble organic solvent by which the surface tension of an aqueous solution becomes small can be chosen from glycol monoether derivatives of a polyhydric alcohol or 1,2-alkyldiols.

As the 1,2-alkyldiols, 1,2-alkyldiols having from 4 to 8 carbon atoms such as butanediol, pentanediol, hexanediol, heptanediol, and octanediol are preferable. 1,2-Hexanediol, 1,2-heptanediol, and 1,2-octanediol, which are ones having from 6 to 8 carbon atoms, are especially preferable because the penetrability into recording paper is strong. Also, it is preferable that the 1,2-alkyldiol is added in an amount in the range of from 0.25 % by weight to 5 % by weight.

As the glycol monoether derivatives of a polyhydric alcohol, derivatives of a polyhydric alcohol in which the alkyl moiety thereof has 3 or more carbon atoms are especially preferable. Specific examples thereof include ethylene glycol monobutyl ether, diethylene glycol mono-n-propyl ether, ethylene glycol monoisopropyl ether, diethylene glycol monoisopropyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol mono-t-butyl ether, propylene glycol mono-n-propyl ether, propylene glycol monoisopropyl ether, propylene glycol mono-n-butyl ether, dipropylene glycol mono-n-butyl ether, dipropylene glycol mono-n-propyl ether, and dipropylene glycol monoisopropyl ether. Also, it is preferable that the glycol monoether derivative of a polyhydric alcohol is added in an amount in the range of from 0.5 % by weight to 15 % by weight.

Also, as another example of the penetration solvent, a low-boiling water-soluble organic solvent is preferable, and a water-soluble low-molecular monohydric alcohol is especially preferable. The "water-soluble low-molecular alcohol" as referred to herein means an alcohol compound having from 1 to 5 carbon atoms whose solubility in water (at 20 °C) is from 0.5 wt% to infinity. Examples of such a compound include methanol, ethanol, n-propyl alcohol, isopropyl alcohol, 2,2-dimethyl-1-propanol, n-butanol, 2-butanol, tert-butanol, isobutanol, 2-methyl-1-butanol, 3-methyl-1-butanol, 3-methyl-2-butanol, n-pentanol, 2-pentanol, 3-pentanol, and tert-pentanol.

The addition amount of the low-boiling water-soluble organic solvent is preferably in the range of from 0.5 % by weight to 10 % by weight based on the ink composition.

Such a penetration solvent may be used singly, or a plural number of penetration solvents can be mixed and used. In particular, by jointly using a plural number of compounds having a different structure from each other, it is possible to obtain similar images against various kinds of papers having different absorptivity and color formation property, and therefore, such is preferable from the viewpoint of adaptability to the paper kind.

Incidentally, in the case of an ink with a comparatively long drying time, among humectants, a material by which the surface tension of an aqueous solution becomes comparatively small can be used as a substitute for the penetration solvent. In this case, an ink may be formulated without adding the foregoing penetration solvent.

### (Surfactant)

A surfactant is used together with the penetration solvent or used singly and is added for the purpose of reducing the surface tension of the ink to accelerate the ink penetrability into a recording medium.

Anionic surfactants such as fatty acid salts and alkyl sulfates, nonionic surfactants such as polyoxyethylene alkyl ethers and polyoxyethylene phenyl ether, acetylene glycol based nonionic surfactants, cationic surfactants, ampholytic surfactants, silicon based surfactants, phosphorus based surfactants, boron based surfactants, and the like can be used as a suitable material.

Examples of silicon based surfactants include BYK-307, BYK-331, BYK-333, and BYK-348 (trade names, all of which are manufactured by BYK-Chemie).

Further, in the invention, acetylene glycol based nonionic surfactants are especially preferable because they are low in or free from foamability. Specific examples of acetylene glycol compounds that are preferabled in the invention include Surfynol 61, 82, 104, 440, 465, 485 and TG, all of which are manufactured by Air Products and Chemicals, Inc.; and Olfine STG and Olefine E1010, all of which are manufactured by Nisshin Chemical Industry Co., Ltd.

Though the addition amount of the acetylene glycol compound may be adequately determined depending upon a desired ink drying time, it is preferably from 0.01 % by weight to 10 % by weight based on the ink composition.

Incidentally, though the surfactant may be used singly as a penetrating agent, in the case where the surfactant is used together with the foregoing penetration solvent, the whole amount of the penetrating agent can be decreased, the foaming property of the surfactant can be reduced, and so on, and hence, such is especially preferable.

The water-soluble organic solvent capable of swelling and/or dissolving the repeating unit structure (I) of the dispersing resin is preferably selected from cyclic amide compounds or cyclic urea compounds which are used as the humectant, such as 2-pyrrolidone, N-methyl-2-pyrrolidone, and 1,3-dimethylimidazolidinone, and glycol monoether derivatives of a polyhydric alcohol or water-soluble low-molecular monohydric alcohols which are used as the penetration solvent.

Also, it is preferable that the weight of the repeating unit structure (I) of the dispersing resin is in the range of from 0.05 % by weight to 10 % by weight, and preferably in the range of from 0.15 % by weight to 5 % by weight based on the weight of the foregoing water-soluble organic solvent.

When the repeating unit structure (I) is too small against the water-soluble organic solvent, that is, the water-soluble organic solvent is too many against the repeating unit structure (I), the resin having adhered to the coloring agent is dissolved in or peeled by the solvent, thereby causing such a problem that the dispersion is liable to cause coagulation. Conversely, when the repeating unit structure (I) is too many against the water-soluble organic solvent, that is, the water-soluble organic solvent is too small against the repeating unit structure (I), a problem that fixability of the resin to a recording medium becomes worse is liable to occur.

### Coloring agent

As the coloring agent, examples of coloring agents that are insoluble or sparingly soluble in an aqueous medium include organic pigments, carbon black, oil-soluble dyes, and disperse dyes. In particular, carbon black, organic pigments, oil-soluble dyes, and disperse dyes are preferable because they are good in the color formation, and they hardly precipitate at the time of dispersion because of their low specific gravity.

In the aqueous ink according to the embodiment of the invention, such a coloring agent is dispersed by the foregoing dispersing resin (preferably, a resin having an anionic group).

With respect to specific examples of carbon black that is preferable in the invention, examples of carbon black manufactured by Mitsubishi Chemical Corporation include No. 2300, 900, MCF88, No. 20B, No. 33, No. 40, No. 45, No. 52, MA7, MA8, MA100 and No. 2200B. Examples of carbon black manufactured by Degussa AG include Color Black FW1, FW2, FW2V, FW18, FW200, S150, S160 and S170, Printex 35, U, V and 140U, and Special Black 6, 5, 4A, 4 and 250. Examples of carbon black manufactured by Columbia Carbon Corp. include Conductex SC and Raven 1255, 5750, 5250, 5000, 3500, 1255 and 700. Examples of carbon black manufactured by Cabot Corporation include Regal 400R, 330R and 660R, Mogul L, Monarch 700, 800, 880, 900, 1000, 1100, 1300 and"1400, and Elftex 12. Incidentally, these are merely one example of carbon black that is suitable in the invention, but it should not be construed that the invention is limited thereto. Such carbon black may be used singly or in admixture of two or more thereof. Also, it is preferred to add such a pigment in an amount of from 0.5 % by weight to 15 % by weight, and preferably from 1 % by weight to 10 % by weight based on the ink composition.

Examples of organic pigments that are preferable in the invention include quinacridone based pigments, quinacridonequinone based pigments, dioxazine based pigments, phthalocyanine based pigments, anthrapyrimidine based pigments, anthanthrone based pigments, indanthrone based pigments, flavanthrone based pigments, perylene based pigments, diketopyrrolopyrrole based pigments, perinone based pigments, quinophthalone based pigments, anthraquinone based pigments, thioingigo based pigments, benzimidazolene based pigments, isoindolinone based pigments, azomethine based pigments, and azo based pigments.

Specific examples of organic pigments that are used in the ink composition according to the invention are as follow.

Examples of pigments that are used in a cyan ink composition include C.I. Pigment Blue 1, 2, 3, 15:3, 15:4, 15:34, 16, 22 and 60; and C.I. Vat Blue 4 and 60. Of these, one member or mixtures of two or more members selected from the group consisting of C.I. Pigment Blue 15:3, 15:4 and 60 are preferable. Also, such a pigment is contained in an amount of from 0.5 % by weight to 15 % by weight, and preferably from 1 % by weight to 10 % by weight based on the cyan ink composition.

Examples of pigments that are used in a magenta ink composition include C.I. Pigment Red 5, 7, 12, 48 (Ca), 48 (Mn), 57 (Ca), 57:1, 112, 122, 123, 168, 184 and 202; and C.I. Pigment Violet 19. Of these, one member or mixtures of two or more members selected from the group consisting of C.I. Pigment Red 122, 202 and 209 and C.I. Pigment Violet 19 are preferable. Also, such a pigment is contained in an amount of from about 0.5 % by weight to 15 % by weight, and preferably from about 1 % by weight to 10 % by weight based on the magenta ink composition.

Examples of pigments that are used in a yellow ink composition include C.I. Pigment Yellow 1, 2, 3, 12, 13, 14C, 16, 17, 73, 74, 75, 83, 93, 95, 97, 98, 119, 110, 114, 128, 129, 138, 150, 151, 154, 155, 180 and 185. Of these, one member or mixtures of two or more members selected from the group consisting of C.I. Pigment Yellow 74, 109, 110, 128 and 138 are preferable. Also, such a pigment is contained in an amount of from about 0.5 % by weight to 15 % by weight, and preferably from about 1 % by weight to 10 % by weight based on the yellow ink composition.

Examples of pigments that are used in an orange ink composition include C.I. Pigment Orange 36 and 43 and a mixture thereof. Also, such a pigment is contained in an amount of from about 0.5 % by weight to 15 % by weight, and preferably from about 1 % by weight to 10 % by weight based on the orange ink composition.

Examples of pigments that are used in a green ink composition include C.I. Pigment Green 7 and 36 and a mixture thereof. Also, such a pigment is contained in an amount of from about 0.5 % by weight to 15 % by weight, and preferably from about 1 % by weight to 10 % by weight based on the green ink composition.

In the aqueous ink composition according to the embodiment of the invention, a ratio of the coloring agent to the dispersing resin is preferably from 10:1 to 1:10, and more preferably from 4:1 to 1:3. Also, the particle size of the coloring agent at the time of dispersion is not larger than 300 nm in terms of a mean particle size, and more preferably not larger than 200 nm in terms of a mean particle size when the maximum particle size measured by the dynamic light scattering method is less than 500 nm.

### Weakly alkaline agent

In an inkjet recording device, in the case where a metal is used for the passage of an ink, when the ink is acidic, the metal may possibly be corroded. Accordingly, it is desired that the ink composition of the invention is adjusted neutral or alkaline.

For the sake of adjusting the ink composition neutral or alkaline, it is preferable that the ink composition further contains a weakly alkaline agent. Here, for the sake of adjusting the ink neutral or alkaline, if a strongly alkaline compound such as sodium hydroxide is used, in the case where the unneutralized group is an acid group (such as a carboxylic acid group and a sulfonic acid group), neutralization of the acid group may possibly proceed. In the invention, by using a weakly alkaline agent, it is possible to keep the ink composition neutral or alkaline without largely changing the degree of neutralization of the foregoing dispersing resin. Thus, it is possible to provide an ink having higher reliability.

Examples of the foregoing weakly alkaline agent include compounds selected from organic acid salts and organic buffering agents. As the organic acid salts, salts of an alkyl carboxylic acid, such as acetates and propionates, and salts of a hydroxy acid, such as lactates, glycolates, and glycerates, are preferable. Of these, alkali metal salts of an alkyl carboxylic acid, such as sodium acetate, potassium acetate, sodium propionate, and potassium propionate, are more preferable. As the organic buffering agents, tris(hydroxymethyl)aminomethane, tris-hydrochlorides, tris-maleic acid, and bis(2-hydroxyethyl)-iminotris(hydroxymethyl)methane are preferable.

The addition amount of the weakly alkaline agent can be adequately set up according to a desired pH of the ink and is preferably in the range of from 0.01 to 10 % by weight.

### Addition resin

The aqueous ink composition according to the embodiment of the invention can further contain a water-soluble and/or water-dispersible addition resin separately from the dispersing resin. It is preferable that after dispersing the coloring agent with the dispersing resin to prepare a dispersion, such an addition resin is added together with the water-soluble organic solvent and other additives. In general, for the sake of stably dispersing the coloring agent in water, since the surface of the coloring agent is hydrophobic, a dispersant such as surfactants and aqueous resins is essential. The coloring agent according to the invention is stably dispersed in advance using the dispersing resin, the addition resin to be added later is not always required to have a dispersing ability against the coloring agent. Accordingly, the foregoing dispersing resin may be used as the water-soluble and/or water-dispersible addition resin, or a water-soluble resin and/or a water-dispersible resin not having a dispersing ability against the coloring agent may be used.

In the case where the foregoing dispersing resin is used as the addition resin, the addition resin contains a "repeating unit structure (I) having an unneutralized group" and a "repeating unit structure (II) having a neutralized group and capable of being hydrated and/or dissolved in water". Such an addition resin may contain a monomer that is the raw material of the dispersing resin.

Also, examples of the water-soluble resin and/or water-dispersible addition resin not having a dispersing ability include polyvinyl alcohol, polyallyl alcohol, polyhydroxyethyl methacrylate, polyvinylpyrrolidone, polyvinylpyridine quaternary salts, polyacrylamide, carboxymethyl cellulose, hydroxypropyl cellulose, starch, polylactic acid, shellac, modified rosin, phenol resins, alkaline salts, and copolymers thereof. Further, resins resulting from hydrophilization of an oily resin not having a water-soluble group in the molecule by oxidation, sulfonic acid addition, etc. can be used as the addition resin.

### Water

Water is a medium which becomes the center of the aqueous ink composition according to the embodiment of the invention. As preferred water, for the purpose of reducing ionic impurities as far as possible, pure water such as ion exchange water, ultrafiltration water, reverse osmosis water, and distilled water and ultrapure water can be used.

Also, by using water sterilized upon irradiation with ultraviolet light or by the addition of hydrogen peroxide, in the case where the ink composition is stored over a long period of time, it is possible to prevent the generation of molds or bacteria, and hence, such is suitable.

### Other components

In the aqueous ink composition according to the embodiment of the invention, additives that are usually used in inks for inkjet recording can be further added as the need arises.

Examples of additives that are added as the need arise include a pH adjustor, an antioxidant or an ultraviolet absorber, and an antiseptic or an anti-mold agent.

Examples of the pH adjustor include alkali metal hydroxides and amines, such as lithium hydroxide, sodium hydroxide, potassium hydroxide, triethanolamine, diethanolamine, aminomethylpropanol, and tripropanolamine.

Examples of the antioxidant or ultraviolet absorber include allophanates such as allophanate and methyl allophanate; biurets such as biuret, dimethyl biuret, and tetramethyl biuret; L-ascorbic acid and salts thereof; Tinuvin 328, 900, 1130, 384, 292, 123, 144, 622, 770 and 292, Irgacor 252 and 153, Irganox 1010, 1076 and 1035, and MD1024, all of which are manufactured by Ciba-Geigy AG; and oxides of lanthanide.

The antiseptic or anti-mold agent can be selected from, for example, sodium benzoate, pentachlorophenol sodium, 2-pyridinethiol-1-oxide sodium, sodium sorbate, sodium dehydroacetate, and 1,2-dibenzothiazolin-3-one.

### Dispersion method of coloring agent and selection of water-soluble organic solvent and dispersing resin

In the invention, as a suitable method of dispersing the coloring agent with the dispersing resin, dispersion can be carried out by dissolving or dispersing an anionic group-containing resin in alkaline water containing an alkaline compound such as organic amines and alkali metal salt compounds, mixing this solution with a coloring agent, and dispersing the mixture using a dispersion machine such as a ball mill, a sand mill, an attritor, a roll mill, an agitator mill, a Henschel mixer, a colloid mill, an ultrasonic homogenizer, a jet mill, and an angmill. More preferably, for the sake of firmly bonding the coloring agent to the resin to stabilize the dispersion, there are employable methods disclosed in JP 9-1513 42 A, JP 10-140065 A, JP 11-209672 A, JP 11-172180 A, JP 10-25440 A, JP 11-43636 A, and JP 2001-247810 A. Outlines of the production methods disclosed in these publications of applications will be given below.

JP 2001-247810 A, JP 9-151342 A, and JP 10-140065 A disclose a "phase inversion method" and an "acid precipitation method".

### a) "Phase inversion method":

In the invention, the "phase inversion method" as referred to herein basically means a self-dispersion (phase inverse emulsification) method of dispersing a mixed melt of a resin having a self-dispersing ability or a dissolution ability and a pigment in water. The "mixed melt" as referred to herein means one including any of the mixed state without being dissolved, the dissolved and mixed state, or the state including the both states.

One specific example includes:
(1) a step of adding a pigment, a neutralizing agent, and a small amount of water to a "dispersing resin precursor (such as the foregoing anionic group-containing resin)"/solvent solution, to prepare a solvent base slurry;
(2) a step of dispersing the slurry while adding it to a large amount of water, to prepare a water base slurry; and
(3) a step of removing the solvent used for dissolving the resin from the water base slurry, to prepare a pigment-containing polymer particle dispersion in which the pigment is included by the water-dispersible polymer.

### b) "Acid precipitation method":

In the invention, the "acid precipitation method" as referred to herein means a method in which a water-containing cake made of a resin and a pigment is prepared, and a part of unneutralized groups contained in the resin in the water-containing cake is neutralized with a neutralizing agent to produce a coloring agent.

Specifically, in the case where the unneutralized group is an anionic acid group, and the neutralizing agent is a basic compound, for example, the acid precipitation method includes (1) a step of dispersing a resin and a pigment in an alkaline aqueous medium and optionally carrying out heat treatment to make the resin gel; (2) a step of making the pH neutral or acidic to render the resin hydrophobic, thereby firmly fixing the resin to the pigment; (3) a step of optionally carrying out filtration and water washing to obtain a water-containing cake; (4) a step of neutralizing a part or the whole of anionic groups contained in the resin in the water-containing cake using a basic compound, followed by re-dispersing in an aqueous medium; and (5) a step of optionally carrying out heat treatment to make the resin gel.

More specific production methods of the foregoing "phase inversion method" and "acid precipitation method" may be the same as those disclosed in JP 9-151342 A and JP 10-140065 A.

Further, JP 11-209672 A and JP 11-172180 A disclose a production method of the coloring agent. Outlines of this production method basically comprise the following production steps.

The production method includes (1) a step of mixing an anionic group-containing resin or a solution thereof in an organic solvent with a basic compound to achieve neutralization; (2) a step of mixing this mixed solution with a pigment to form a suspension liquid and then dispersing the pigment by a dispersion machine, etc. to obtain a pigment dispersion; (3) a step of optionally carrying out distillation to remove the solvent; (4) a step of adding an acidic compound to precipitate the anionic group-containing resin, thereby coating the pigment with the anionic group-containing resin; (5) a step of optionally carrying out filtration and water washing; and (6) a step of adding a basic compound to neutralize the anionic group of the anionic group-containing resin and disperse it in an aqueous medium, thereby obtaining an aqueous dispersion.

Also, this production method may be the same as those disclosed in JP 11-209672 A and JP 11-172180 A.

By adding the foregoing water-soluble organic solvent and optionally, the foregoing other components and water to the thus obtained aqueous dispersion of the coloring agent, it is possible to suitably produce an aqueous ink composition. As described previously, it is preferable that the water-soluble organic solvent is chosen such that the affinity between the foregoing dispersing resin precursor and the water-soluble organic solvent becomes high (the dispersing resin precursor is swollen or partially dissolved in the water-soluble organic solvent).

As the inkjet recording method of the invention, any method is employable so far as it is a system in which the foregoing aqueous ink composition is ejected as droplets from a fine nozzle so as to make the droplets adhere to a recording medium. Some of examples thereof will be described below. First of all, an electrostatic suction system is enumerated. This system is a system in which a strong electric field is applied between a nozzle and an accelerating electrode aligned in front of the nozzle, an ink is continuously emitted in the droplet state from the nozzle, and printing information signals are given to deflecting electrodes during a period of time when the ink droplets fly between the deflecting electrodes, to achieve recording, or the ink droplets are emitted without being deflected corresponding to printing information signals.

The second method is a system in which a pressure is applied to an ink liquid using a small pump, and a nozzle is mechanically vibrated using a crystal oscillator, etc., thereby forcibly emitting ink droplets. The emitted ink droplets are electrically charged simultaneously with the emission, and printing information signals are given to deflecting electrodes during a period of time when the ink droplets fly between the deflecting electrodes, to achieve recording.

The third method is a system of using a piezoelectric element, in which a pressure and printing information signals are simultaneously added to an ink liquid using a piezoelectric element, and ink droplets are emitted and recorded.

The fourth method is a system of rapidly volumetrically expanding an ink liquid by the action of heat energy, in which the ink liquid is heat expanded using microelectrodes according to printing information signals, and ink droplets are emitted and recorded.

Among the foregoing various inkjet recording systems, in particular, by combining the printing method at an ink ejection rate of a relatively low rate of not more than 10 m/s with the aqueous ink composition of the invention, it is possible to stably carry out inkjet recording while preventing the adhesion of the ink to a ejection nozzle, and hence, such is preferable.

Also, the recorded matter according to the embodiment of the invention is obtained by printing with the foregoing aqueous ink composition by an inkjet recording method.

### <Examples>

The present invention will be illustrated with reference to the following Examples, but the invention should not be construed as being limited thereto.

### <Preparation of dispersion>

### (1) Dispersion 1:

75 g of MA100 (a trade name, manufactured by Mitsubishi Chemical Corporation) as carbon black, 25 g of Joncryl 611 (a trade name, manufactured by Johnson Polymer, average molecular weight: 8,100, acid value: 53) as a styrene-acrylic acid based water-soluble resin having a carboxylic acid group as an anionic group, 1.0 g of potassium hydroxide, and 250 g of ultrapure water purified by the ion exchange method and reverse osmosis method were mixed, and the mixture was dispersed in a ball mill by zirconia beads for 10 hours. The resulting dispersion stock solution was filtered by a membrane filter (a trade name, manufactured by Nihon Millipore Ltd.) having a pore size of about 8 µm to remove coarse particles, and the residue was diluted with ultrapure water to a pigment concentration of 15 wt% to prepare a dispersion 1 dispersed with a water-soluble resin.

### (2) Dispersion 2:

A dispersion was prepared in the same manner as in the dispersion 1, except that the carbon black was replaced by Color Black S160 (a trade name, manufactured by Degussa AG) and that the addition amount of potassium hydroxide was changed to 1.20 g. This liquid is designated as a dispersion 2.

### (3) Dispersion 3:

A dispersion was prepared in the same manner as in the dispersion 1, except that the carbon black was replaced by 65 g of C.I. Pigment Blue 15:3 that is an organic pigment, that the addition amount of the resin was changed to 35 g, and that the addition amount of potassium hydroxide was changed to 1.70 g. This liquid is designated as a dispersion 3.

### (4) Dispersion 4:

A dispersion was prepared in the same manner as in the dispersion 1, except that the carbon black was replaced by C.I. Pigment Yellow 74 that is an organic pigment. This liquid is designated as a dispersion 4.

### (5) Dispersion 5:

75 g of MA100 (a trade name, manufactured by Mitsubishi Chemical Corporation) as carbon black, 25 g of Joncryl 678 (a trade name, manufactured by Johnson Polymer, average molecular weight: 8,500, acid value: 215) as a styrene-acrylic acid based water-soluble resin having a carboxylic acid group as an anionic group, 1.80 g of potassium hydroxide, and 250 g of ultrapure water purified by the ion exchange method and reverse osmosis method were mixed, and the mixture was dispersed in a ball mill by zirconia beads for 10 hours. The resulting dispersion stock solution was filtered by a membrane filter (a trade name, manufactured by Nihon Millipore Ltd.) having a pore size of about 8 µm to remove coarse particles, and the residue was diluted with ultrapure water to a pigment concentration of 15 wt% to prepare a dispersion 5 dispersed with a water-soluble resin.

### (6) Dispersion 6:

A dispersion was prepared in the same manner as in the dispersion 1, except that the carbon black was replaced by Color Black S160 (a trade name, manufactured by Degussa AG) and that the addition amount of potassium hydroxide was changed to 3.80 g. This liquid is designated as a dispersion 6.

### (7) Dispersion 7:

A dispersion was prepared in the same manner as in the dispersion 1, except that the carbon black was replaced by 80 g of C.I. Pigment Red 122 that is an organic pigment, that the addition amount of the resin was changed to 20 g, and that the addition amount of potassium hydroxide was changed to 3.44 g. This liquid is designated as a dispersion 7.

### (8) Dispersion 8:

### (Synthesis of dispersing resin)

A reactor equipped with a stirrer, a thermometer, a reflux condenser, and a dropping funnel was purged with nitrogen. Thereafter, 25 g of styrene, 30 g of n-dodecyl methacrylate, 20 g of methoxy polyethylene glycol methacrylate, 15.5 g of butyl methacrylate, and 9.3 g of methacrylic acid were dissolved in 100 g of methyl ethyl ketone, and the reactor was purged with nitrogen gas. The same solution of monomers in methyl ethyl ketone was charged in the dropping funnel, 0.2 g of 2,2'-azobis(2,4-dimethylvaleronitrile) was further added, and the reactor was purged with nitrogen gas.

Polymerization reaction was carried out in a nitrogen atmosphere by heating at 65 °C while adding the solution in the dropping funnel over 3 hours. The resulting copolymer solution was purified by repeating drying in vacuo, dissolution in methyl ethyl ketone and filtration, to which was then added methyl ethyl ketone such that the solids content of the resin became 50 %. There was thus obtained a.resin solution A having an acid value (KOH) of about 70 and an average molecular weight of 50,000.

### (Preparation of dispersion)

150 g of MA100 (a trade name, manufactured by Mitsubishi Chemical Corporation) as carbon black and 100 g of the foregoing resin solution A were mixed and stirred to prepare a slurry. 50 g of a 10 % KOH aqueous solution was added to this slurry, and the mixture was dispersed using an ultrahigh pressure homogenizer.

Subsequently, this dispersion solution was gradually added to 400 g of pure water with stirring, the whole of the methyl ethyl ketone and a part of the water were removed in vacuo at 60 °C, and ultrapure water was further added to the residue such that the pigment concentration became 15 %. There was thus obtained a dispersion 8.

### (9) Dispersion 9:

A dispersion was prepared in the same manner as in the dispersion 8, except that the carbon black was replaced by Color Black S160 (a trade name, manufactured by Degussa AG) and that the addition amount of the 10 % KOH aqueous solution was changed to 47.5 g. This liquid is designated as a dispersion 9.

### (10) Dispersion 10:

50 g of C.I. Pigment Blue 15:4 that is an organic pigment and 100 g of the foregoing resin solution A were mixed and stirred to prepare a slurry. 47.5 g of a 10 % KOH aqueous solution was added to this slurry, and the mixture was dispersed using an ultrahigh pressure homogenizer.

Subsequently, this dispersion solution was gradually added to 250 g of pure water with stirring, the whole of the methyl ethyl ketone and a part of the water were removed in vacuo at 60 °C, and ultrapure water was further added to the residue such that the pigment concentration became 15 %. There was thus obtained a dispersion 10.

### (11) Dispersion 11:

A dispersion was prepared in the same manner as in the dispersion 10, except that the pigment was replaced by 200 g of C.I. Pigment Red 122 that is an organic pigment and that the addition amount of the 10 % KOH aqueous solution was changed to 39.5 g. This liquid is designated as a dispersion 11.

### (12) Dispersion 12:

A dispersion was prepared in the same manner as in the dispersion 10, except that the pigment was replaced by 150 g of C.I. Pigment Yellow 74 that is an organic pigment and that the addition amount of the 10 % KOH aqueous solution was changed to 39.5 g. This liquid is designated as a dispersion 12.

### (13) Dispersion 13:

### (Synthesis of dispersing resin)

In a 1-L beaker, 40 wt% of n-butyl methacrylate, 5 wt% of n-butyl acrylate, 20 wt% of styrene, 15 wt% of 2-hydroxyethyl methacrylate, and 20 wt% of methacrylic acid were mixed such that the whole amount became 500 g, and 4 g of tert-butyl peroxyoctoate as a polymerization initiator was further added to obtain a resin synthetic mixed liquid.

Next, 500 g of methyl ethyl ketone was charged in a 1-L flask, and the temperature was raised to 75 °C while stirring in a nitrogen atmosphere. The foregoing resin synthetic mixed liquid was dropped under stirring at 75 °C over 3 hours. Further, the reaction was continued under stirring at 75 °C for an additional 8 hours. Thereafter, the reaction synthesis product was spontaneously cooled to 25 °C and then diluted by the addition of methyl ethyl ketone such that the solids content became 50 %. There was thus obtained a resin solution B having an acid value (KOH) of 150 and an average molecular weight of 15,000.

### (Preparation of dispersion)

150 g of MA100 (a trade name, manufactured by Mitsubishi Chemical Corporation) as carbon black, 100 g of the foregoing resin solution B, 50 g of a 10 % potassium hydroxide aqueous solution, and 700 g of ultrapure water purified by the ion exchange method and reverse osmosis method were mixed, and the mixture was dispersed together with glass beads (diameter: 1.7 mm, 1.5 times (by weight) of the mixture) in a sand mill (manufactured by Yasukawa Seisakusho) for 2 hours. Thereafter, the glass beads were eliminated, other components were added, and the mixture was stirred at the ambient temperature for 20 minutes, followed by filtration by a 5-µm membrane filter.

The resulting filtrate was subjected to distillation of the whole of the methyl ethyl ketone and a part of the water at 80 °C under atmospheric pressure. Further, a 1N hydrochloric acid solution was dropped while stirring to coagulate the resin layer. This was subjected to suction filtration while washing with water to obtain a water-containing cake of the pigment. This water-containing cake was re-dispersed in 375 g of a 1 % potassium hydroxide aqueous solution while stirring, and ultrapure water was further added such that the pigment concentration became 15 %. There was thus obtained a dispersion 13.

### (14) Dispersion 14:

A dispersion was prepared in the same manner as in the dispersion 13, except that the carbon black was replaced by Color Black S160 (a trade name, manufactured by Degussa AG) and that the addition amount of the 1 % potassium hydroxide aqueous solution at the time of redispersion was changed to 422 g. This liquid is designated as a dispersion 14.

### (15) Dispersion 15:

A dispersion was prepared in the same manner as in the dispersion 13, except that the carbon black was replaced by 250 g of C.I. Pigment Red 122 that is an organic pigment and that the addition amount of the 1 % potassium hydroxide aqueous solution at the time of redispersion was changed to 422 g. This liquid is designated as a dispersion 15.

### (16) Dispersion 16:

### (Preparation of dispersing resin)

50g of a styrene-methyl methacrylate based resin having an average molecular weight of 15,000 and a styrene molar ratio of 35 %, 500 g of 2-pyrrolidone, and 25 g of sulfamic acid were mixed, and the mixture was reacted at 80 °C for 3 hours, thereby sulfonating a part of the styrene. The reaction mixture was purified by repeating dissolution in 2-pyrrolidone and precipitation with acidic water at a pH of 5.0 and subsequently dissolved in methyl ethyl ketone such that the solids content became 50 %. There was thus obtained a resin solution C having an acid value (KOH) of 70 and an average molecular weight of 15,000.

### (Preparation of dispersion)

150 g of MA100 (a trade name, manufactured by Mitsubishi Chemical Corporation) as carbon black, 100 g of the foregoing resin solution C, 25 g of a 10 % potassium hydroxide aqueous solution, and 700 g of ultrapure water purified by the ion exchange method and reverse osmosis method were mixed, and the mixture was dispersed together with glass beads (diameter: 1.7 mm, 1.5 times (by weight) of the mixture) in a sand mill (manufactured by Yasukawa Seisakusho) for 2 hours. Thereafter, the glass beads were eliminated, other components were added, and the mixture was stirred at the ambient temperature for 20 minutes, followed by filtration by a 5-µm membrane filter.

The resulting filtrate was subjected to distillation of the whole of the methyl ethyl ketone and a part of the water at 80 °C under atmospheric pressure. Further, a 1N hydrochloric acid solution was dropped while stirring to coagulate the resin layer. This was subjected to suction filtration while washing with water to obtain a water-containing cake of the pigment. This water-containing cake was re-dispersed in 310 g of a 1 % potassium hydroxide aqueous solution while stirring, and ultrapure water was further added such that the pigment concentration became 15 %. There was thus obtained a dispersion 16.

### (17) Dispersion 17:

A dispersion was prepared in the same manner as in the dispersion 16, except that the carbon black was replaced by 250 g of C.I. Pigment Blue 15:3 that is an organic pigment. This liquid is designated as a dispersion 17.

### <Preparation of aqueous ink>

### (Example 1)

26.7 g of the resulting dispersion 1 of carbon black, 20 g of glycerin, 5 g of diethylene glycol and 3 g of N-methylpyrrolidone as a humectant, and 3 g of isopropyl alcohol as a penetration solvent were mixed, to which was then added ultrapure water to make the whole amount to 100 g. The mixture was stirred for 2 hours and filtered by a membrane filter (a trade name, manufactured by Nihon Millipore Ltd.) having a pore size of about 1.2 µm to prepare an aqueous ink composition.

### (Examples 2 to 26)

Inks were prepared in the same manner as in Example 1, except that the additives and amounts were changed to those in formulations shown in Tables 1-1 and 1-2.

In Examples 23 and 24, Movinyl 742N (a trade name: Clariant Polymers K.K.) was used as an addition resin 1. In Examples 25 and 26, a resin prepared by using the resin solution A, preparing a resin emulsion of 20 wt% of the resin single body in the same manner, except for not adding C.I. Pigment Red 122 to the dispersion 11, and using it in the state of containing a repeating unit structure (I) having an unneutralized group and a repeating unit structure (II) having a neutralized group and capable of being hydrated and/or dissolved in water was used as an addition resin 2.

### (Comparative Example 1)

An ink was prepared by further adding 2.6 g of 1 % potassium hydroxide to the formulation of Example 2. As a result of adding potassium hydroxide at the time of preparing the ink, the amount of potassium hydroxide was about 125 % based on the amount of the carboxyl group in the dispersing resin.

### (Comparative Example 2)

An ink was prepared by further adding 2.1 g of 1 % potassium hydroxide to the formulation of Example 11. As a result of adding potassium hydroxide at the time of preparing the ink, the amount of potassium hydroxide was about 125 % based on the amount of the carboxyl group in the dispersing resin.

The foregoing respective formulations are summarized and shown in Tables 1-1 and 1-2.

**Table 1-1**

| Formulation/Example | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Kind of used dispersion | 1 | 2 | 3 | 4 | 5 | 6 | 7 | 8 | 9 | 10 | 11 | 12 |

| Formulation (wt%) | | | | | | | | | | | | |
|---|---|---|---|---|---|---|---|---|---|---|---|---|
| Dispersion | 26.7 | 53.3 | 26.7 | 40 | 26.7 | 46.7 | 40 | 26.7 | 53.3 | 26.7 | 40 | 40 |
| Glycerin | 20 | 13 | 15 | 15 | 20 | 15 | 15 | 20 | 13 | 15 | 15 | 15 |
| Diethylene glycol | 5 | - | - | - | - | - | - | 5 | - | - | - | |
| Triethylene glycol | - | 7 | - | 7 | 5 | 5 | - | - | 7 | 2 | 2 | 2 |
| Trimethylolpropane | - | - | 8 | - | - | - | 8 | - | - | 8 | 8 | 8 |
| 2-Ethyl-1,3-hexanediol | - | - | - | - | - | - | - | - | - | - | - | - |
| 2-Pyrrolidone | - | 4 | - | 2 | 4 | - | 2 | - | 2 | 4 | 4 | 4 |
| N-Methylpyrrolidone | 3 | - | - | - | - | - | - | 3 | - | - | - | - |
| Isopropyl alcohol | 3 | - | - | - | 3 | - | - | 3 | - | - | - | - |
| Triethylene glycol monobutyl ether | - | - | 7 | 5 | - | 5 | 5 | - | - | 1 | 1 | 1 |
| 1,2-Hexanediol | - | - | - | - | - | - | - | - | - | 3 | 3 | 3 |
| 2-Butanol | - | - | - | - | - | - | - | - | - | - | - | - |
| Surfynol 465 | - | 1.5 | - | 1 | - | 1 | 1 | - | 0.4 | 0.4 | 0.4 | 0.4 |
| Surfynol TG | - | - | - | - | - | - | - | - | 0.5 | 0.5 | 0.5 | 0.5 |
| Surfynol 104 | - | - | - | - | - | - | - | - | - | - | - | - |
| Potassium propionate | - | - | - | - | - | - | - | - | - | - | - | - |
| Tris(hydroxymethyl)aminomethane | - | - | - | - | - | - | - | - | - | - | - | - |
| 1 % potassium hydroxide aqueous solution | - | - | - | - | - | - | - | - | - | - | - | - |
| Addition resin 1 | - | - | - | - | - | - | - | - | - | - | - | - |
| Addition resin 2 | - | - | - | - | - | - | - | - | - | - | - | |
| Ultrapure water | Bal. | Bal. | Bal. | Bal. | Bal. | Bal. | Bal. | Bal. | Bal. | Bal. | Bal. | Bal. |

| | | | | | | | | | | | | |
|---|---|---|---|---|---|---|---|---|---|---|---|---|
| Bal: Balance | | | | | | | | | | | | |

**Table 1-2**

| Formulation/Example | Example | | | | | | | | | | | | | | Com. Ex. | |
|---|---|---|---|---|---|---|---|---|---|---|---|---|---|---|---|---|
| | 13 | 14 | 15 | 16 | 17 | 18 | 19 | 20 | 21 | 22 | 23 | 24 | 25 | 26 | 1 | 2 |
| Kind of used dispersion | 13 | 14 | 15 | 16 | 17 | 1 | 8 | 13 | 10 | 11 | 9 | 11 | 11 | 12 | 2 | 11 |

| Formulation (wt%) | | | | | | | | | | | | | | | | |
|---|---|---|---|---|---|---|---|---|---|---|---|---|---|---|---|---|
| Dispersion | 26.7 | 53.3 | 40 | 26.7 | 40 | 26.7 | 26.7 | 26.7 | 27.6 | 40 | 53.3 | 40 | 40 | 40 | 53.3 | 40 |
| Glycerin | 20 | 13 | 15 | 20 | 15 | 20 | 20 | 20 | 15 | 10 | 10 | 5 | 5 | 5 | 13 | 15 |
| Diethylene glycol | 5 | - | - | 5 | - | 5 | 5 | 5 | - | - | - | - | - | - | - | - |
| Triethylene glycol | - | 7 | 7 | - | 7 | - | - | - | - | - | - | - | - | - | 7 | 2 |
| Trimethylolpropane | - | - | - | - | - | - | - | - | 10 | 10 | 10 | 10 | 10 | 8 | - | 8 |
| 2-Ethyl-1,3-hexanediol | - | - | - | - | - | - | - | - | 2 | 2 | 4 | 2 | 2 | 2 | - | - |
| 2-Pyrrolidone | - | 4 | 2 | - | 2 | - | - | - | 2 | 2 | - | 2 | 2 | 2 | 4 | 4 |
| N-Methylpyrrolidone | 3 | - | - | 3 | - | 3 | 3 | 3 | - | - | - | - | - | - | - | - |
| Isopropyl alcohol | 3 | - | - | 3 | - | 3 | 3 | 3 | - | - | - | - | - | - | - | - |
| Triethylene glycol monobutyl ether | - | - | 5 | - | 5 | - | - | - | 2 | 2 | 2 | 1 | 1 | - | - | 1 |
| 1,2-Hexanediol | - | - | - | - | - | - | - | - | - | - | - | - | 1 | - | - | 3 |
| 2-Butanol | - | - | - | - | - | - | - | - | 2 | 2 | - | 2 | 2 | 3 | - | - |
| Surfynol 465 | - | 1 | 1 | - | 1 | - | - | - | - | - | - | - | - | - | 1.5 | 0.4 |
| Surfynol TG | - | - | - | - | - | - | - | - | - | - | - | - | - | - | - | 0.5 |
| Surfynol 104 | - | - | - | - | - | - | - | - | - | 2 | 2 | 1.5 | 2.5 | 2.5 | - | - |
| Potassium propionate | - | - | - | - | - | 0.5 | - | - | - | | | | | | - | - |
| Tris(hydroxymethyl)aminomethane | - | - | - | - | - | - | 0.5 | 1 | - | 5 | - | 5 | - | 5 | - | - |
| 1 % potassium hydroxide aqueous solution | - | - | - | - | - | - | - | - | - | - | - | - | - | - | 2.6 | 2.1 |
| Addition resin 1 | - | - | - | - | - | - | - | - | - | - | 2 | 13 | - | - | - | - |
| Addition resin 2 | - | - | - | - | - | - | - | - | - | - | - | - | 30 | 30 | - | - |
| Ultrapure water | Bal. | Bal. | Bal. | Bal. | Bal. | Bal. | Bal. | Bal. | Bal. | Bal. | Bal. | Bal. | Bal. | Bal. | Bal. | Bal. |

| | | | | | | | | | | | | | | | | |
|---|---|---|---|---|---|---|---|---|---|---|---|---|---|---|---|---|
| Bal: Balance | | | | | | | | | | | | | | | | |

### <Evaluation method>

### (Storage stability)

Each of the inks of Examples 1 to 26 and Comparative Examples 1 to 2 was allowed to stand at 60 °C for 2 weeks and one month, respectively and to stand in the frozen state for one week, and the viscosity immediately after the preparation of an ink was compared with a value after standing. The evaluation criteria are as follows:
AA: A fluctuation width is less than ±3 %.
A: A fluctuation width is ±3 % or more and less than ±6 %.
B: A fluctuation width is ±6 % or more and less than ±10 %.
C: A fluctuation width is ±10 % or more.

As a result of the storage stability, a weight ratio "I/S" of the "repeating unit structure (I) having an unneutralized group" to the "repeating unit structure (II) having a neutralized group and capable of being hydrated and/or dissolved in water" and a molar ratio "I/[I + II]" of the "repeating unit structure (I) having an unneutralized group" to the sum of the foregoing repeating unit structure (I) and the foregoing repeating unit structure (II) are summarized and shown in Table 2.

**Table 2**

| Example | Weight ratio in unneutralized part | Molar ratio in unneutralized part | Stability |
|---|---|---|---|
| | (wt%) | (%) | |
| 1 | 044 | 25 | AA |
| 2 | 0.18 | 10 | A |
| 3 | 0.25 | 10 | AA |
| 4 | 0.18 | 10 | AA |
| 5 | 4.76 | 67 | A |
| 6 | 2.13 | 30 | AA |
| 7 | 1.14 | 20 | AA |
| 8 | 0.12 | 5 | AA |
| 9 | 0.23 | 10 | AA |
| 10 | 046 | 10 | AA |
| 11 | 0.46 | 25 | AA |
| 12 | 0.58 | 25 | AA |
| 13 | 2.48 | 50 | AA |
| 14 | 1.24 | 25 | AA |
| 15 | 0.99 | 25 | AA |
| 16 | 2.48 | 30 | AA |
| 17 | 0.99 | 30 | AA |
| 18 | 0.44 | 25 | AA |
| 19 | 0.12 | 5 | AA |
| 20 | 2.48 | 50 | AA |
| 21 | 0.46 | 10 | AA |
| 22 | 0.46 | 25 | AA |
| 23 | 0.23 | 7 | AA |
| 24 | 0.46 | 5 | AA |
| 25 | 2.76 | 25 | AA |
| 26 | 2.88 | 25 | AA |
| 2 | 0 | 0 | C |

| Comparative Example | | | |
|---|---|---|---|
| 1 | 0 | 0 | C |
| 2 | 0 | 0 | C |

As shown in Table 2, the inks of Examples 1 to 26 each containing a "dispersing resin containing a repeating unit structure (I) having an unneutralized group and a repeating unit structure (II) having a neutralized group and capable of being hydrated and/or dissolved in water" were stable such that fluctuation in the viscosity before and after allowing to stand under the foregoing conditions was small as less than 6 %. On the other hand, in Comparative Example 1 in which in Example 2, potassium hydroxide was further added to neutralize all of the unneutralized groups in the resin and Comparative Example 2 in which in Example 11, potassium hydroxide was further added to neutralize all of the unneutralized groups in the resin, the stability was inferior such that the viscosity started to fluctuate immediately after compounding with the materials of ink and that fluctuation in the viscosity before and after allowing to stand under the foregoing conditions exceeded 10 %.

### <INDUSTRIAL APPLICABILITY>

The aqueous ink composition of the invention has high storage stability and is especially suitable for use as an ink for inkjet recording.

## Claims

1. An aqueous ink composition containing a coloring agent, a "dispersing resin containing a repeating unit structure (I) having an unneutralized group and a repeating unit structure (II) having a neutralized group and capable of being hydrated and/or dissolved in water", a "water-soluble organic solvent capable of swelling and/or dissolving the repeating unit structure (I)", and water, wherein the repeating unit structure (I) has a molar ratio in the range of from 1 % to 67 % based on the sum of the repeating unit structure (I) and the repeating unit structure (II).

2. The aqueous ink composition according to claim 1, wherein the water-soluble organic solvent is a cyclic amide compound and/or a cyclic urea compound.

3. The aqueous ink composition according to claim 1, wherein the water-soluble organic solvent is a glycol monoether derivative of a polyhydric alcohol.

4. The aqueous ink composition according to claim 1, wherein the water-soluble organic solvent is a water-soluble low-molecular monohydric alcohol.

5. The aqueous ink composition according to any one of claims 1 to 4, wherein the weight of the repeating unit structure (I) is in the range of from 0.05 % by weight to 10 % by weight based on the weight of the water-soluble organic solvent.

6. The aqueous ink composition according to any one of claims 1 to 4, wherein the weight of the repeating unit structure (I) is in the range of from 0.15 % by weight to 5 % by weight based on the weight of the water-soluble organic solvent.

7. The aqueous ink composition according to any one of claims 1 to 6, wherein the coloring agent is carbon black.

8. The aqueous ink composition according to any one of claims 1 to 6, wherein the coloring agent is an organic pigment.

9. The aqueous ink composition according to any one of claims 1 to 6, wherein the coloring agent is selected from oil-soluble dyes and disperse dyes.

10. The aqueous ink composition according to any one of claims 1 to 9, wherein the unneutralized group of the repeating unit structure (I) is a carboxylic acid group and that the neutralized group of the repeating unit structure (II) is a carboxylic acid anion group.

11. The aqueous ink composition according to any one of claims 1 to 10, wherein the repeating unit structure (I) has a molar ratio in the range of from 1 % to 30 % based on the sum of the repeating unit structure (I) and the repeating unit structure (II).

12. The aqueous ink composition according to any one of claims 1 to 11, further containing a weakly alkaline agent, wherein the composition is alkaline.

13. The aqueous ink composition according to claim 12, wherein the weakly alkaline agent is selected from organic acid salts and organic buffering agents.

14. The aqueous ink composition according to any one of claims 1 to 13, further containing a water-soluble and/or water-dispersible addition resin.

15. The aqueous ink composition according to claim 14, wherein the water-soluble and/or water-dispersible addition resin has a "repeating unit structure (I) having an unneutralized group" and a "repeating unit structure (II) having a neutralized group and capable of being hydrated and/or dissolved in water".

16. An inkjet recording method comprising ejecting a droplet of the aqueous ink composition according to any one of claims 1 to 15 so as to make the droplet adhere to a recording medium, thereby carrying out recording.

17. Recorded matter printed with the aqueous ink composition according to any one of claims 1 to 15 by an inkjet recording method.

## Patentansprüche

1. Wässrige Tintenzusammensetzung, umfassend einen färbenden Bestandteil, ein dispergierendes Harz mit einer sich wiederholenden Struktureinheit (I) mit einer nicht neutralisierten Gruppe und einer sich wiederholenden Struktureinheit (II) mit einer neutralisierten Gruppe, die in Wasser hydratisiert und/oder gelöst werden kann, ein wasserlösliches organisches Lösungsmittel, das die sich wiederholende Struktureinheit (I) quellen und/oder lösen kann, und Wasser, wobei der molare Anteil an sich wiederholenden Struktureinheiten (I) im Bereich von 1% bis 67% liegt, bezogen auf die Summe der sich wiederholenden Struktureinheiten (I) und der sich wiederholenden Struktureinheiten (II).

2. Wässrige Tintenzusammensetzung nach Anspruch 1, wobei das wasserlösliche organische Lösungsmittel eine cyclische Amidverbindung und/oder eine cyclische Harnstoffverbindung ist.

3. Wässrige Tintenzusammensetzung nach Anspruch 1, wobei das wasserlösliche organische Lösungsmittel ein Glycolmonoetherderivat eines mehrwertigen Alkohols ist.

4. Wässrige Tintenzusammensetzung nach Anspruch 1, wobei das wasserlösliche organische Lösungsmittel ein wasserlöslicher einwertiger Alkohol mit einem geringen Molekulargewicht ist.

5. Wässrige Tintenzusammensetzung nach einem der Ansprüche 1 bis 4, wobei das Gewicht der sich wiederholenden Struktureinheit (I) im Bereich von 0,05 Gew.% bis 10 Gew.% liegt, bezogen auf das Gewicht des wasserlöslichen organischen Lösungsmittels.

6. Wässrige Tintenzusammensetzung nach einem der Ansprüche 1 bis 4, wobei das Gewicht der sich wiederholenden Struktureinheit (I) im Bereich von 0,15 Gew.% bis 5 Gew.% liegt, bezogen auf das Gewicht des wasserlöslichen organischen Lösungsmittels.

7. Wässrige Tintenzusammensetzung nach einem der Ansprüche 1 bis 6, wobei der färbende Bestandteil ein Ruß ist.

8. Wässrige Tintenzusammensetzung nach einem der Ansprüche 1 bis 6, wobei der färbende Bestandteil ein organisches Pigment ist.

9. Wässrige Tintenzusammensetzung nach einem der Ansprüche 1 bis 6, wobei der färbende Bestandteil aus öllöslichen Farbstoffen und dispergierbaren Farbstoffen ausgewählt ist.

10. Wässrige Tintenzusammensetzung nach einem der Ansprüche 1 bis 9, wobei die nicht neutralisierte Gruppe der sich wiederholenden Struktureinheit (I) eine Carbonsäuregruppe ist und wobei die neutralisierte Gruppe der sich wiederholenden Struktureinheit (II) eine Carbonsäureaniongruppe ist.

11. Wässrige Tintenzusammensetzung nach einem der Ansprüche 1 bis 10, wobei der molare Anteil an sich wiederholenden Struktureinheiten (I) im Bereich von 1% bis 30% liegt, bezogen auf die Summe der sich wiederholenden Struktureinheiten (I) und der sich wiederholenden Struktureinheiten (II).

12. Wässrige Tintenzusammensetzung nach einem der Ansprüche 1 bis 11, weiterhin umfassend ein schwach alkalisches Mittel, wobei die Zusammensetzung alkalisch ist.

13. Wässrige Tintenzusammensetzung nach Anspruch 12, wobei das schwach alkalische Mittel aus Salzen von organischen Säuren und organischen Puffern ausgewählt ist.

14. Wässrige Tintenzusammensetzung nach einem der Ansprüche 1 bis 13, weiterhin umfassend ein zusätzliches Harz, das in Wasser löslich und/oder dispergierbar ist.

15. Wässrige Tintenzusammensetzung nach Anspruch 14, wobei das zusätzliche Harz, das in Wasser löslich und/oder dispergierbar ist, ein Harz mit einer sich wiederholenden Struktureinheit (I) mit einer nicht neutralisierten Gruppe und einer sich wiederholenden Struktureinheit (II) mit einer neutralisierten Gruppe, die in Wasser hydratisiert und/oder gelöst werden kann, ist.

16. Tintenstrahlaufzeichnungsverfahren, umfassend das Versprühen von Tröpfchen der wässrigen Tintenzusammensetzung nach einem der Ansprüche 1 bis 15 und das Aufbringen der versprühten Tröpfchen auf einem Aufzeichnungsmedium, um einen Ausdruck zu erzeugen.

17. Ausdruck, der unter Anwendung eines Tintenstrahlaufzeichnungsverfahrens und unter Verwendung der wässrigen Tintenzusammensetzung nach einem der Ansprüche 1 bis 15 hergestellt wurde.

## Revendications

1. Composition d'encre aqueuse contenant un agent colorant, une "résine dispersante contenant une structure à motifs récurrents (I) ayant un groupe non neutralisé et une structure à motifs récurrents (II) ayant un groupe neutralisé et capable d'être hydratée et/ou dissoute dans l'eau", un "solvant organique hydrosoluble capable de gonfler et/ou dissoudre la structure à motifs récurrents (I)", et de l'eau, dans laquelle la structure à motifs récurrents (I) a un rapport molaire dans la plage de 1 % à 67 % rapporté à la somme de la structure à motifs récurrents (I) et de la structure à motifs récurrents (II).

2. Composition d'encre aqueuse selon la revendication 1, dans laquelle le solvant organique hydrosoluble est un composé amide cyclique et/ou un composé urée cyclique.

3. Composition d'encre aqueuse selon la revendication 1, dans laquelle le solvant organique hydrosoluble est un dérivé de monoéther de glycol d'un alcool polyhydrique.

4. Composition d'encre aqueuse selon la revendication 1, dans laquelle le solvant organique hydrosoluble est un alcool monohydrique hydrosoluble de faible masse moléculaire.

5. Composition d'encre aqueuse selon l'une quelconque des revendications 1 à 4, dans laquelle le poids de la structure à motifs récurrents (I) est dans la plage de 0,05 % en poids à 10 % en poids rapporté au poids du solvant organique hydrosoluble.

6. Composition d'encre aqueuse selon l'une quelconque des revendications 1 à 4, dans laquelle le poids de la structure à motifs récurrents (I) est dans la plage de 0,15 % en poids à 5 % en poids rapporté au poids du solvant organique hydrosoluble.

7. Composition d'encre aqueuse selon l'une quelconque des revendications 1 à 6, dans laquelle l'agent colorant est le noir de carbone.

8. Composition d'encre aqueuse selon l'une quelconque des revendications 1 à 6, dans laquelle l'agent colorant est un pigment organique.

9. Composition d'encre aqueuse selon l'une quelconque des revendications 1 à 6, dans laquelle l'agent colorant est choisi parmi des colorants liposolubles et des colorants dispersés.

10. Composition d'encre aqueuse selon l'une quelconque des revendications 1 à 9, dans laquelle le groupe non neutralisé de la structure à motifs récurrents (I) est un groupe acide carboxylique et dans laquelle le groupe neutralisé de la structure à motifs récurrents (II) est un groupe anionique acide carboxylique.

11. Composition d'encre aqueuse selon l'une quelconque des revendications 1 à 10, dans laquelle la structure à motifs récurrents (1) a un rapport molaire dans la plage de 1 % à 30 % rapporté à la somme de la structure à motifs récurrents (I) et de la structure à motifs récurrents (II).

12. Composition d'encre aqueuse selon l'une quelconque des revendications 1 à 11, contenant en outre un agent faiblement alcalin, dans laquelle la composition est alcaline.

13. Composition d'encre aqueuse selon la revendication 12, dans laquelle l'agent faiblement alcalin est choisi parmi des sels d'acide organique et des agents tampons organiques.

14. Composition d'encre aqueuse selon l'une quelconque des revendications 1 à 13, contenant en outre une résine additionnelle hydrosoluble et/ou dispersible dans l'eau.

15. Composition d'encre aqueuse selon la revendication 14, dans laquelle la résine additionnelle hydrosoluble et/ou dispersible dans l'eau a une "structure à motifs récurrents (I) ayant un groupe non neutralisé" et une "structure à motifs récurrents (II) ayant un groupe neutralisé et capable d'être hydratée et/ou dissoute dans l'eau".

16. Procédé d'enregistrement par jet d'encre comprenant l'éjection d'une gouttelette de la composition d'encre aqueuse selon l'une quelconque des revendications 1 à 15 de manière à faire adhérer la gouttelette à un milieu d'enregistrement, en effectuant ainsi l'enregistrement.

17. Matière enregistrée imprimée avec la composition d'encre aqueuse selon l'une quelconque des revendications 1 à 15 par un procédé d'enregistrement par jet d'encre.
